# EUROPEAN PATENT APPLICATION

(11) **EP 4 343 302 A1**
(43) Date of publication of application: **27.03.2024**
(21) Application number: 22306414.8
(22) Date of filing: 26.09.2022
(51) Int. Cl.: G01M 11/02, G01N 21/958, G06N 3/08

(54) **COMPUTER-IMPLEMENTED METHOD FOR DETERMINING A LOCALIZATION OF AT LEAST ONE DEFECT IN A TESTED OPHTHALMIC LENS**

(71) Applicant: Essilor International, 94220 Charenton-Le-Pont (FR)
(72) Inventor: LEMAIRE, Cédric, 78100 SAINT-GERMAIN-EN-LAYE (FR); KUN, Ludovic, 94220 CHARENTON-LE-PONT (FR)
(74) Representative: Korakis-Ménager, Sophie

(57) **Abstract**

Calculation device for determining a localization of at least one defect in an ophthalmic lens, the calculation device is configured to receive at least two images of the ophthalmic lens, to determine the localization by inputting the at least two images of the ophthalmic lens in a machine learning model previously trained with at least two images of a model ophthalmic lens, on the at least two model images a localization of at least one defect being labelled.

## Description

### Technical field

Various aspects of this disclosure generally relate to methods and systems for determining a localization of defects in ophthalmic lenses.

### Background information and prior art

During the different steps of an ophthalmic lens manufacturing process, various types of defects may appear.

To detect the defects a cosmetic control of ophthalmic lenses can be performed. This control can be performed manually by an operator, using for example a neon tube light or an arc lamp.

However, when the cosmetic control is performed manually, the quality and reliability of the detection of defects depends on the operator realising this detection.

Therefore, there is a need for a method for determining a localization of defects in ophthalmic lenses, in which the quality and reliability of the localization do not depend on the operator.

### Summary

The following presents a simplified summary to provide a basic understanding of various aspects of this disclosure.

One aspect of this disclosure is a calculation device for determining a localization of at least one defect in an ophthalmic lens. The calculation device is configured to receive at least two images of the ophthalmic lens and to determine the localization of the at least one defect by inputting the at least two images of the ophthalmic lens in a machine learning model previously trained with at least two images of a model ophthalmic lens. On the at least two images of the model ophthalmic lens a localization of at least one defect is labelled.

Another aspect of this disclosure is a system for determining a localization of at least one defect in an ophthalmic lens. The system comprises a calculation device and an image acquisition device. The calculation device is configured to receive at least two images of the ophthalmic lens and to determine the localization of the at least one defect by inputting the at least two images of the ophthalmic lens in a machine learning model previously trained with at least two images of a model ophthalmic lens. On the at least two images of the model ophthalmic lens a localization of at least one defect being labelled. The image acquisition device is configured to acquire the at least two images of the ophthalmic lens and to transmit the at least two images of the ophthalmic lens to the calculation device.

Another aspect of this disclosure is a computer-implemented method for determining a localization of at least one defect in an ophthalmic lens. The computer implemented method comprises a step of receiving at least two images of the ophthalmic lens, a step of determining the localization of the at least one defect by inputting the at least two images of the ophthalmic lens in a machine learning model previously trained with at least two images of a model ophthalmic lens. On the at least two images of the model ophthalmic lens a localization of at least one defect is labelled.

Another aspect of this disclosure is a computer-implemented method for training a machine learning model. The computer implemented method comprises a step of receiving at least two images of at least one model ophthalmic lens, a step of receiving a localisation of at least one defect in the at least two images, a step of labelling the at least two images with the localization and a step of training the machine learning model using the labelled at least two images.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a system for determining a localization of defects in an ophthalmic lens.
Figure 2 represents a calculation device.
Figure 3 represents a method for determining a localization of defects in ophthalmic lenses.
Figure 4 represents a method to train the machine learning model.
Figure 5 represents an architecture of a RetinaNet neural network.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

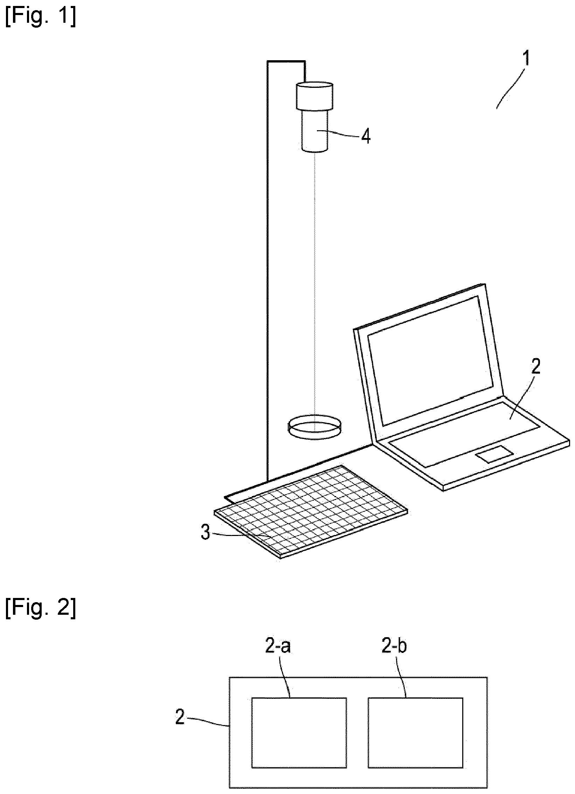

The figure 1 represents a system 1 for determining a localization of defects in ophthalmic lenses.

The ophthalmic lens may be a spectacle lens, a single vision lens, a bifocal lens, a multifocal lens, a progressive addition lens, an ophthalmic lens, a semi-finished lens, a finished lens, an edged lens, an uncut lens, or a stock lens.

The determination of the localization of the defects can be realised in the entire ophthalmic lens or only on a part of the ophthalmic lens. This part is called the area of interest.

If the ophthalmic lens is an uncut lens which is to be cut during an edging step to the size and shape of an eyeglass frame, the area of interest is advantageously a part of the ophthalmic lens intended to be remaining after edging.

If the ophthalmic lens is a progressive addition lens, the area of interest of the ophthalmic lens may comprise at least:
- a far vision control point FV,
- a near vision control point NV,
- a main line M starting from one end of the area of optical interest, ending on the opposite end of the area of optical interest and passing through the far and near vision control points.

The system 1 comprises a calculation device 2 for determining a localization of defects in ophthalmic lenses, a display device 3, and an image acquisition device 4.

The display device 3 is positioned, or positionable, to face a first side of the ophthalmic lens and configured to illuminate the whole ophthalmic lens or the area of interest of the ophthalmic lens according to a plurality of successive specific patterns comprising a bright area and a dark area. The display device 3 may be controlled by the calculation device 2 or another calculation device. This specific pattern can also be a uniform colour covering all or the majority of the display device 3.

The image acquisition device 4 is configured and positioned, or positionable, to acquire at least two images. Each image comprises a view from a second side of the ophthalmic lens of the area of interest in front of a specific pattern. The image acquisition device 4 may be controlled by the calculation device 2 or another calculation device.

The image acquisition device 4 can be for example a camera.

As presented in figure 2 the calculation device 2 comprises a memory 2-a and a processor 2-b. This calculation device 2 is for example a calculation module, a computer, a mobile device like a smartphone or a tablet. The calculation device 2 can also be a virtual machine located on a cloud network or a server not co-located with the user of the system 1.

Examples of processors 2-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory 2-a is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the processor 2-a of the calculation device 2.

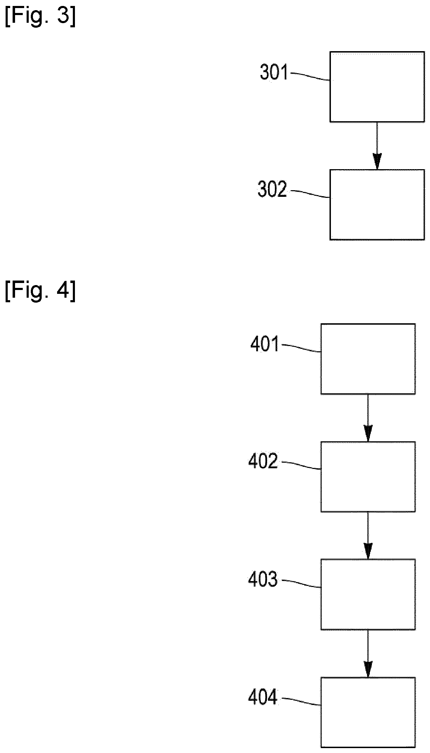

The memory 2-a is configured to store a computer program comprising instructions which, when the program is executed by the processor 2-b, cause the calculation device 2 to carry out a method for determining a localization of defects in a tested ophthalmic lens. This method is represented in figure 3 and comprises:
- a step 301 of receiving a plurality, for example two, test images of the tested ophthalmic lens,
- a step 302 of determining the localization by inputting the test images in a machine learning model previously trained with a plurality, for example two, model images of a model ophthalmic lens, on the two model images a localization of at least one defect being labelled.

**The** test images are obtained by the image acquisition device 4.

The two test images are chosen among:
- a plurality of transmission images of the tested ophthalmic lens,
- a plurality of phase images of the tested ophthalmic lens,
- a plurality of diffusion images of the tested ophthalmic lens,
- a plurality of polarisation images of the tested ophthalmic lens,
- a plurality of reflection images of a convex side of the tested ophthalmic lens, the reflection images being acquired with a first plurality of wavelengths and
- a plurality of reflection images of a concave side of the tested ophthalmic lens, the reflection images being acquired with a second plurality of wavelengths.

The transmission images are obtained by displaying a uniform colour on the display device 3, typically white, red, green, or blue and for each colour obtaining a transmission image of the area of interest of the tested ophthalmic lens or the whole area of the tested ophthalmic lens using the image acquisition device 4. In our example as four colours are successively displayed by the display device 3, four transmission images are obtained by the image acquisition device 4.

The European application reference EP3588048 describes a way to obtain the diffusion image. The diffusion image can be obtained using the following steps:
- receiving a plurality of images, each image comprises a view of the area of interest of the ophthalmic lens or the whole ophthalmic lens in front of a plurality of specific patterns, each specific pattern comprising a bright area and a dark area, and at least one image received is saturated in light intensity,
- combining the plurality of images in a single combined image.

The combined image is the diffusion image.

Each specific pattern is realised by the display device 3 and comprises a bright area and a dark area. In this divulgation, a dark area of a specific pattern is an area which local luminosity values do not exceed 20% of the maximum value, and a bright area of a specific pattern is an area which local luminosity values are over 80% of the maximum value.

In this divulgation, an image saturated in light intensity has a higher bright-to-dark surface ratio than the corresponding specific pattern.

Advantageously, a saturated image comprises a less extended "gray" zone, intermediate between bright and dark, compared to a non-saturated image, which facilitates subsequently identifying a defect based on said image.

Each image received can be saturated in light intensity.

The plurality of specific patterns can be arranged so that the superimposition of the dark areas of all the secondary patterns is a dark area which occupies the entire space of the recombined image of the area of interest.

The specific patterns can comprise alternate bright and dark stripes, and/or the specific patterns can be a checked pattern comprising alternate bright and dark elements

A first specific pattern can comprise alternate bright and dark stripes, each stripe extending along a first direction, and a second specific pattern can be a translation of the first specific pattern in a second direction sensibly perpendicular to the first direction. Advantageously, all specific patterns are striped patterns and periodic translations of each other in a direction perpendicular to the direction along which the stripes extend.

The width of the stripes can be equal in the two images corresponding respectively to the first and the second specific pattern.

Other specific patterns can be used alternating bright and dark stripes. The stripes on the first specific pattern can be oriented in a first direction, and the stripes on the second specific pattern can be oriented in a second direction. The second direction may be perpendicular to the first direction. Advantageously those different types of patterns are applied using at least two sets of patterns, each set of patterns comprising at least two specific patterns which are a translation of each other, and each set of patterns is used to provide at least two secondary patterns based on at least two different specific patterns of the same set of patterns.

The dark area of at least one specific pattern can have a larger surface than the bright area of said specific pattern. Preferably, the dark area of at least one specific pattern may have a surface at least 1.5 times larger than the bright area of said specific pattern.

Each specific pattern can have a bright-to-dark surface ratio corresponding to the surface of the bright area divided by the surface of the dark area. In embodiments, the bright-to-dark surface ratio of at least one specific pattern, preferably of each specific pattern, is at least equal to 1/10, preferably at least equal to 1/6, and at most equal to 1, preferably at most equal to 1/2.

Each image also has a bright-to-dark surface ratio, corresponding to the surface of the bright area of the corresponding specific pattern as seen through the area of interest of the lens on the image divided by the surface of the dark area of the corresponding specific pattern as seen through the area of interest of the lens on the image.

The bright-to-dark surface ratio of the image may be different than the bright-to-dark ratio of the corresponding specific pattern. For example, if an image is acquired while underexposing the image acquisition means, then the bright-to-dark surface ratio of the image is lower than that of the corresponding specific pattern. On the contrary, if an image is acquired while overexposing the image acquisition means, then the bright-to-dark surface ratio of the image is higher than that of the corresponding specific pattern.

Advantageously, the bright-to-dark surface ratio of the image is at least equal to 30%, preferably at least equal to 70%, most preferably at least equal to 80% and at most equal to 1000%, preferably at most equal to 130%, most preferably at least equal to 120%. Said otherwise, the bright-to-dark surface ratio of the image is comprised within the range [30%-1000%], preferably comprised within the range [70%-130%], most preferably comprised within the range [80%-120%].

For each specific pattern, a characteristic dimension related to the dark-to-bright surface ratio of the specific pattern may be determined.

For example, if the specific pattern is a periodic repetition of an elementary pattern consisting of one dark stripe and one bright stripe, the dark-to-bright surface ratio may be calculated by dividing the width of a dark stripe by the width of a bright stripe.

According to this example, the width of a dark stripe is a characteristic dimension of the specific pattern related to the dark-to-bright surface ratio of the specific pattern.

Similarly, for each image, a characteristic dimension related to the dark-to-bright surface ratio of the image may be determined.

According to this example, if the image is saturated, then the width of a dark stripe on the image with regard to a dimension of the area of interest of the lens is lower than the width of the same dark stripe on the specific pattern with regard to a known dimension of the specific pattern.

In embodiments, at least one dark stripe as viewed through the ophthalmic lens has an apparent width greater than or equal to 2 mm and smaller than or equal to 3 cm, in particular, comprised between 5 mm and 2 cm included, for example of about 5 mm to about 1 cm included. In this disclosure, an apparent dimension or an apparent distance on an image corresponds to a dimension or distance on the image scaled relatively to a known dimension or distance on one surface of the ophthalmic lens visible on the image, such as a known distance between markings on one surface of the ophthalmic lens, or such as a known lens diameter.

During the combination step, for each pixel of the N images, the minimum of intensity of the N acquired images is determined and this minimum intensity is the value of the pixel of the combined image.

**The** polarisation image of the tested ophthalmic lens can be obtained by placing a polarising filter between the display device 3, and the image acquisition device 4.

The polarisation image of the tested ophthalmic lens can also be obtained by using a display device 3 having a polarized light source to display a white homogeneous pattern, and by placing a polarization filter with the same polarisation axis than the display device 3 between the camera and the lens taking a picture with the image acquisition device 4.

The test images received during the step 301 of receiving can be concatenated in a single image.

This single image can comprise several channels, for example three channels. Using three channels allows the use of a conventional colour image in which each channel represents generally one among the red, green and blue layers of the image.

In this divulgation and differently from how the different channels of an image are generally used, one can use the channels of the image to combine different images taken with different measurement and/or processing means. For example, a first channel of the single image can comprise a transmission image of the tested ophthalmic lens. A second channel of the single image can comprise a phase image of the tested ophthalmic lens. A third channel of the single image can comprise a diffusion image of the tested ophthalmic lens.

The machine learning model is previously trained with a set of training data. The set of the training data may be a plurality of model images of a model ophthalmic lens, on the model images a localization of defects is labelled. The model images will be similar to the test images of the tested ophthalmic lens used to determine the localisation of the defects. For example, if images of the tested ophthalmic lens are transmission, phase and diffusion images the model images must be transmission, phase and diffusion images of the model ophthalmic lens.

**The** figure 4 represents a method to train the machine learning model. This method comprises:
- a step 401 of receiving a plurality, for example two, model images of model ophthalmic lenses,
- a step 402 of receiving a localisation of at least one defect in the model images,
- a step 403 of labelling the two model images with the localization,
- a step 404 of training the machine learning model using the labelled two model images.

This method takes as input this set of training data to "learn" an equation, a set of rules, or some other data structure. This learned structure or statistical model may then be used to make generalisations about the training set or predictions about new data. As used herein, "statistical model" refers to any learned and/or statistical data structure that establishes or predicts a relationship between two or more data parameters (e.g., inputs and outputs). Although this disclosure is described below with reference to neural networks, other types of statistical models may be employed in accordance with the present disclosure.

The localization of the defects can be, for each defect, parameters representing an area covered by the defects, for example a centre of the area and possibly the size of the area, or points of a perimeter of the area, or a shape of the area and extreme points of this shape.

**The** localization of the defects can be stored in the EXIF (Exchangeable Image File) data of the files containing the model images.

**This** training is performed iteratively until the model is accurate enough. As an example, training the model may imply model images associated with hundred model ophthalmic lenses.

The training of the machine learning model may be done using the calculation device 2 or using another calculation device.

The training of the machine learning model may be done at the same time or at a different time than the time when the level of certainty is determined based on the trained machine learning model.

The training of the machine learning model may be done in one shot or several shots and/or upgraded regularly or at each using.

The machine learning model can be a neural network for example a RetinaNet neural network, a Faster R-CNN neural network or a SSD FPN neural network.

**The** RetinaNet neural network is a one-stage object detection model.

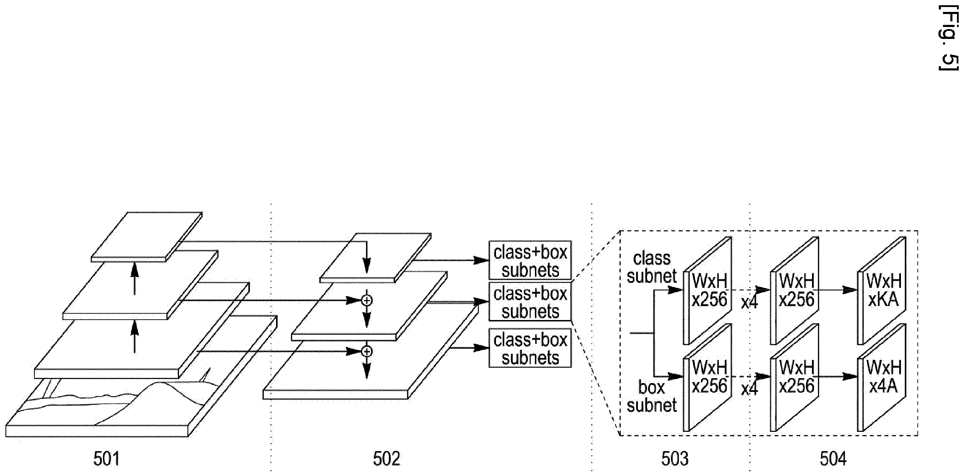

The figure 5 represents an architecture of the RetinaNet neural network. This architecture comprises
- Bottom-up Pathway 501 - The backbone network (e.g. ResNet) which calculates the feature maps at different scales, irrespective of the input image size or the backbone.
- Top-down pathway and Lateral connections 502 - The top-down pathway upsamples the spatially coarser feature maps from higher pyramid levels, and the lateral connections merge the top-down layers and the bottom-up layers with the same spatial size.
- Classification subnetwork 503 - It predicts the probability of an object being present at each spatial location for each anchor box and object class.
- Regression subnetwork 504 - It regresses the offset for the bounding boxes from the anchor boxes for each ground-truth object.

**When** using the Faster R-CNN neural network, one can use the implementation of TensorFlow. One can use a ResNet 50 convolutional layer.

When using the SSD FPN neural network, one can use the implementation of TensorFlow.

**The** performance of the training of the RetinaNet and the Faster R-CNN neural networks is improved when the size of the images used to do the training is increased.

**The** Faster R-CNN neural network and the SSD FPN neural network allow a quicker training and inferring than when using other types of neural network.

## Claims

1. Calculation device (2) for determining a localization of at least one defect in an ophthalmic lens, the calculation device (2) being configured:
• to receive at least two images of the ophthalmic lens,
• to determine the localization of the at least one defect by inputting the at least two images of the ophthalmic lens in a machine learning model previously trained with at least two images of a model ophthalmic lens, on the at least two images of the model ophthalmic lens a localization of at least one defect being labelled.

2. Calculation device (2) according to the claim 1,
the at least two images of the ophthalmic lens being chosen among:
• a transmission image of the ophthalmic lens,
• a phase image of the ophthalmic lens,
• a diffusion image of the ophthalmic lens,
• a polarisation image of the ophthalmic lens,
• a plurality of reflection images of a convex side of the ophthalmic lens, the reflection images being acquired with a first plurality of wavelengths and
• a plurality of reflection images of a concave side of the ophthalmic lens, the reflection images being acquired with a second plurality of wavelengths.

3. Calculation device (2) according to the claim 1 or 2,
the at least two images of the ophthalmic lens being integrated in a concatenated image,
• a first channel of the concatenated image comprising a first image of the at least two images of the ophthalmic lens,
• a second channel of the concatenated image comprising a second image of the at least two images of the ophthalmic lens,
the concatenated image being inputted to the machine learning model to determine the localization.

4. Calculation device (2) according to the claim 3,
the first channel comprising a transmission image of the ophthalmic lens,
the second channel comprising a phase image of the ophthalmic lens and
a third channel of the concatenated image comprising a diffusion image of the ophthalmic lens.

5. Calculation device (2) according to any one of the claims 1 to 4, the machine learning model being a neural network.

6. System (1) for determining a localization of at least one defect in an ophthalmic lens, the system (1) comprising a calculation device (2) and an image acquisition device (4), the calculation device (2) being configured:
• to receive at least two images of the ophthalmic lens,
• to determine the localization of the at least one defect by inputting the at least two images of the ophthalmic lens in a machine learning model previously trained with at least two images of a model ophthalmic lens, on the at least two images of the model ophthalmic lens a localization of at least one defect being labelled,
the image acquisition device (4) being configured:
• to acquire the at least two images of the ophthalmic lens and
• to transmit the at least two images of the ophthalmic lens to the calculation device (2).

7. Computer-implemented method for determining a localization of at least one defect in an ophthalmic lens, the computer implemented method comprising:
• receiving (301) at least two images of the ophthalmic lens,
• determining (302) the localization of the at least one defect by inputting the at least two images of the ophthalmic lens in a machine learning model previously trained with at least two images of a model ophthalmic lens, on the at least two images of the model ophthalmic lens a localization of at least one defect being labelled.

8. The computer-implemented method for determining the localization, according to the claim 7, the at least two images of the ophthalmic lens being chosen among:
• a transmission image of the ophthalmic lens,
• a phase image of the ophthalmic lens,
• a diffusion image of the ophthalmic lens,
• a polarisation image of the ophthalmic lens,
• a plurality of reflection images of a convex side of the ophthalmic lens, the reflection images being acquired with a first plurality of wavelengths and
• a plurality of reflection images of a concave side of the ophthalmic lens, the reflection images being acquired with a second plurality of wavelengths.

9. The computer-implemented method for determining the localization, according to the claim 7 or 8, the at least two images of the ophthalmic lens being integrated in a concatenated image:
• a first channel of the concatenated image comprising a first image of the at least two images of the ophthalmic lens,
• a second channel of the concatenated image comprising a second image of the at least two images of the ophthalmic lens,
the concatenated image being inputted to the machine learning model to determine the localization.

10. The computer-implemented method for determining the localization, according to the claim 9,
the first channel comprising a transmission image of the ophthalmic lens,
the second channel comprising a phase image of the ophthalmic lens and
a third channel of the concatenated image comprising a diffusion image of the ophthalmic lens.

11. The computer-implemented method for determining the localization, according to any one of the claims 7 to 10, the machine learning model being a neural network.

12. The computer-implemented method for determining the localization, according to the claim 11, the neural network being chosen among:
• a RetinaNet neural network
• a Faster R-CNN neural network and
• a SSD FPN neural network.

13. Computer-implemented method for training a machine learning model, the computer implemented method comprising:
• receiving (401) at least two images of at least one model ophthalmic lens,
• receiving (402) a localisation of at least one defect in the at least two images,
• labelling (403) the at least two images with the localization,
• training (404) the machine learning model using the labelled at least two model images.

14. The computer-implemented method for training the machine learning model, according to the claim 13,
the at least two model images being chosen among:
• a transmission image of the at least one model ophthalmic lens,
• a phase image of the at least one model ophthalmic lens,
• a diffusion image of the at least one model ophthalmic lens,
• a polarisation image of the at least one model ophthalmic lens,
• a plurality of reflection images of a convex side of the at least one model ophthalmic lens, the reflection images being acquired with a first plurality of wavelengths and
• a plurality of reflection images of a concave side of the at least one model ophthalmic lens, the reflection images being acquired with a second plurality of wavelengths.

15. The computer-implemented method for training the machine learning model, according to the claim 13 or 14, the machine learning model being a neural network chosen among:
• a RetinaNet neural network
• a Faster R-CNN neural network and
• a SSD FPN neural network.
